# EUROPEAN PATENT SPECIFICATION

(11) **EP 0 680 644 B1**
(45) Date of publication and mention of the grant of the patent: **19.03.2003**
(21) Application number: 94924980.9
(22) Date of filing: 13.09.1994
(51) Int. Cl.: G06K 11/06, G06K 11/20, G06F 3/033

(54) **MULTI-FUNCTIONALITY USER-INTERFACE DOWNWARDS COMPATIBLE WITH SINGLE-FUNCTIONALITY APPLICATION SOFTWARE**
ABWÄRTSKOMPATIBLE MULTIFUNKTIONELLE ANWENDERSCHNITTSTELLE MIT EINZEL-FUNKTIONELLER ANWENDUNGSSOFTWARE
INTERFACE UTILISATEUR A MULTIFONCTIONNALITE PRESENTANT UNE COMPATIBILITE DESCENDANTE AVEC UN LOGICIEL D'APPLICATION A FONCTIONNALITE UNIQUE

(30) Priority: 22.09.1993 EP 93202740
(43) Date of publication of application: 08.11.1995
(73) Proprietor: Koninklijke Philips Electronics N.V., 5621 BA Eindhoven (NL)
(72) Inventor: DUWAER, Arne, Lex, NL-5621 BA Eindhoven (NL); KOOLEN, Gerardus, Johannes, Karel, Marijke, NL-5621 BA Eindhoven (NL)
(74) Representative: Groenendaal, Antonius Wilhelmus Maria
(86) International application number: IB9400276
(87) International publication number: WO95008813

(56) References cited:
- WO-A-92/09038
- US-A- 4 686 332
- US-A- 4 977 397
- US-A- 5 231 381

## Description

### FIELD OF THE INVENTION

The invention relates to an information processing system comprising a user-interface apparatus that includes a plurality of functionally different coordinate input devices, in which each respective one of the devices is arranged for locating a respective one of a plurality of user-generated stimuli for thereupon providing respective data representative of the respective user-generated stimulus, the system further comprising processing means coupled to the plurality of coordinate input devices for processing of the respective data, the processing means being arranged for running an application program that is dedicated to receive data in a coordinate format of a single one of the input devices, the information processing system being arranged for supplying the respective data from the plurality of coordinate input devices to the application program in said coordinate format of said single one of the input devices, for uniformly processing data provided by any of the plurality of coordinate input devices.

### BACKGROUND ART

Such a system is known from WO 92/09038, which discloses a computer system having a digitizing tablet overlaying the display screen. Said document represents the basis for the preamble of claim 1. The tablet serves as a user's primary input device. Various features of the system make it possible for the user to run and interact with standard programs designed for keystroke and mouse input and not designed for use with a tablet. In addition to the main processor, on which the user's programs are executed, there is an interface processor, which manages input from the tablet, presents feedback to the user, and provides keystroke and mouse data to the main processor as if from a standard keyboard controller. The interface processor presents the user with a collection of simulated devices, including standard devices such as a keyboard and a mouse.

U.S. Patent 5,231,381 (PHN 13.100) was issued on a multiple-functionality user-interface, referred to as the PAID device (Philips Advanced Interactive Display) manufactured by Philips. The PAID device comprises as a first coordinate input device a touch tablet and as a second coordinate input device a graphical tablet functionally integrated with the touch tablet.

Data is entered via the touch tablet by the user placing a finger near or on the tablet's surface. Typically, a touch tablet is used for menu-driven software applications, wherein the user has to point to an item shown on the touch tablet to select a corresponding program. The touch tablet is, for example, a capacitive tablet that detects a capacitive coupling between the user's finger and a resistive layer. Data is entered via the graphical tablet by the user manipulating a stylus whose position and displacements are detected and translated into coordinates. Software applications for a graphical tablet typically include drawing or handwriting recognition. The graphical tablet is, for example, an electromagnetic tablet wherein patterns of mutually adjacent electrically conductive loops collaborate with the stylus through an electromagnetic coupling. Typically, the touch tablet is used for low positional resolution applications, whereas the graphical tablet is employed for applications processing high-resolution data.

Selection between finger input mode and stylus input mode may be achieved through a user-operated switch or through an automatic detection mechanism to detect the presence of the stylus, e.g., by means of a pressure sensor integrated in the stylus or by means of remote sensing techniques, for reversible switching between finger input mode to stylus input mode.

The data entered represents the position of the finger or stylus relative to the tablet. The touch tablet and the graphical tablet in PAID use physically different sensors. Advantages are manifold. There is no cross-talk between the tablets. The tablets are optimized independently from one another without a compromise stemming from shared hardware, thereby giving rise to high performance. The independence is particularly relevant to the integration of the input device with an LCD in a layered structure during manufacturing, when the different sensors simply are individually merged with the LCD's parts such as the polarizers, leading to a reduction in manufacturing cost. The PAID device provides a high performance for a reasonably price, and accordingly is a highly attractive option in the rapidly expanding market of user-interfaces.

In document US 4,686,332 a combined finger touch and stylus detection system is disclosed for use on the viewing surface of the visual display device. Transparent conductors arranged in horizontal and vertical grid are supported on a flexible, transparent overlay membrane which is adaptable to a variety of displays. An interconnection pattern is provided between the transparent conductors in the array and busses which interconnect the conductors with the supporting electronics, whereby a minimum number of bus wires can be employed to service the array conductors and yet both unique finger touch location sensing and unique stylus location sensing can be accomplished. The system includes a control processor which operates on stored program instruction which, in a first embodiment provides for the alternate detection of either finger touch location and stylus location.

### OBJECT OF THE INVENTION

It is an object of the invention to further enhance the functionalities, notably the general applicability, of an information processing system having a user-interface apparatus that includes a plurality of coordinate input devices.

### SUMMARY OF THE INVENTION

To this end, the invention provides an information processing system as mentioned in the preamble above, characterized in that the system comprises selection means that is operative to automatically select a particular one of the coordinate input devices among the plurality of coordinate input devices for providing data to the processing means, the selection means being operative to perform the following operations:
determining which ones of the plurality of coordinate input devices are actuated simultaneously;
determining which one of the simultaneously actuated coordinate input devices is to gain priority over each other one of the simultaneously actuated coordinate input devices according to a priority scheme;
selecting the particular one of the coordinate input devices as the one gaining the priority.

Thus, the system in the invention uses a multi-functionality user-interface rendered downwards compatible with single-functionality application software. It will be clear to the skilled artisan that the character of the coordinate input device, supplying the input data to the application, is irrelevant as long as the input data is rendered digestible by the application run on the system. A variety of ways to achieve this is discussed below with reference to the drawing. The system according to the invention comprises selection means that is operative to automatically select a particular one of the coordinate input devices among the plurality of coordinate input devices for providing data to the processing means. The selection means perform the following operations. First it is to be determined which ones of the plurality of coordinate input devices are actuated simultaneously. Thereupon, it is to be determined which one of the simultaneously actuated coordinate input devices is to gain priority over each other one of the simultaneously actuated coordinate input devices according to a priority scheme. Then the particular one of the coordinate input devices that is to supply its data to the processing means is chosen as the one gaining the priority.

The invention is based on recognizing that commercially widely available software typically supports a single kind of coordinate input device only. There is a very large variety of joystick-driven applications, such as video games, and of mouse-driven applications, such as window-based programs. Similarly, there are touch-only software applications and stylus-only software applications. The information processing system in the invention, including a plurality of functionally different coordinate input devices, is essentially rendered downwards compatible with existing software for a single type of coordinate input device only. This considerably increases the versatility of the system of the invention.

For instance, a first one of the plurality of coordinate input devices comprises an absolute coordinate input device for providing data representative of an absolute coordinate of a location of a first one of the user-operated stimuli and a second one of the plurality of coordinate input devices comprises a relative coordinate input device for providing second data representative of a relative displacement of a second one of the user-operated stimuli. The first input device is, e.g., a touch tablet or a graphical tablet, whereas the second input device is, e.g., a joystick, a mouse or a trackball. The processing means in the invention is operative to run at least a relative-coordinate application program (for mouse, joystick, trackball) or an absolute-coordinate application program (for touch tablet, graphical tablet) and processes both the first and second data by virtue of the downwards compatibility.

In another embodiment, a first one of the plurality of coordinate input devices comprises a touch tablet for providing first data representative of a first absolute coordinate of a location of a user's finger with regard to the touch tablet, and a second one of the plurality of coordinate input devices comprises a graphical tablet for providing second data representative of a second absolute coordinate of a location of a stylus with regard to the graphical tablet. The processing means is operative to run a relative-coordinate application program, e.g., mouse or joystick software, to process data provided by any of the tablets, rendered feasible again by virtue of the downwards compatibility. Thus, the range of usability of a user-interface apparatus comprising a touch tablet and a graphical tablet is considerably extended.

In a further embodiment selection can be accomplished as follows. A first one of the plurality of coordinate input devices comprises a touch tablet for providing first data representative of a first coordinate of a location of a first user-operated stimulus, corresponding with the user's finger, with regard to the touch tablet. A second one of the plurality of coordinate input devices comprises a graphical tablet for providing second data representative of a second coordinate of a location of a second user-operated stimulus, corresponding with a stylus, with regard to the graphical tablet. The selection means is operative to provide the first data to the processing means in a touch mode, and to provide the second data to the processing means in a stylus mode. The selection means is operative to switch between said modes under control of an interaction of one of said first and second stimuli with the user-interface attaining a pre-specified magnitude. For example, switching is controlled by the stylus being within a pre-specified range from the graphical tablet, a pressure exerted by the graphical tablet on a tip of the stylus exceeding a pre-specified threshold, or a force exerted on the touch tablet by the user's hand exceeding a pre-specified further threshold.

For example, in an embodiment of the PAID device, the touch tablet and the graphical tablet provide data that are representative of both location and force. The touch tablet registers not only the x and y coordinates of the touching finger, but also the touch pressure. Similarly, the graphical tablet registers, in addition to the x and y coordinates of the stylus tip, registers the force exerted on the tip. The force information can be supplied to the selection means to accomplish the automatic selection between the touch mode and the graphical mode. If, e.g., the force exerted on the tip of the stylus exceeds a pre-specified threshold, the graphical tablet is actuated and gains priority over the finger-operated touch tablet.

The force information in the PAID device can also be used to discriminate between valid and invalid data entries through thresholding, or to handle either tablet as a calligraphic drawing or writing device. In a calligraphic device an increasing force is translated into an increasing line width. Now, converting the data provided by the touch tablet as well as the data furnished by the graphical tablet into a common digital format renders both tablets compatible with finger-only software or stylus only software, both being able to process the coordinate data as well as the force data.

Furthermore, the application software can be supplied with extra information, for example, indicating which one of the coordinate input devices is acting as the source of data to be processed. If the plurality of coordinate input devices includes certain ones supplying highspeed data such as a graphical tablet (typically 200 coordinates/sec), and other ones supplying low-speed data such as a touch screen (typically 100 coordinates/sec), the operation of the processing means can be adapted to the accuracy required or processing time available, e.g., in order to reduce power consumption or to allow for a plurality of processing tasks performed in a time-multiplexed manner. Reducing power consumption is highly relevant to portable, battery powered equipment.

### BRIEF DESCRIPTION OF THE DRAWING

The invention is described below in further detail and by way of example with reference to the accompanying drawing, wherein:
Fig. 1 shows a diagram a first example of an information processing system in accordance with the invention; and
Fig. 2 shows a diagram of a second example of an information processing system in accordance with the invention.

Throughout the figures, like reference numerals indicate similar or corresponding features.

### DETAILED DESCRIPTION OF THE EMBODIMENTS

### First example

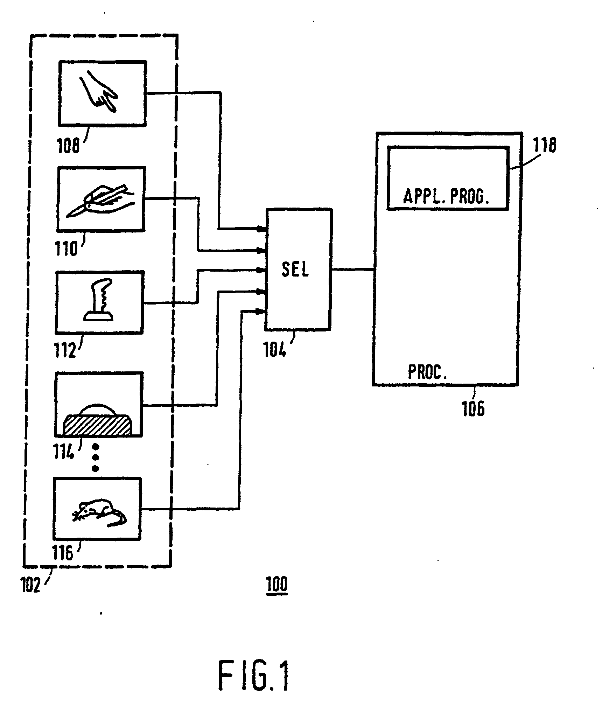

Fig. 1 shows an information processing system 100 in accordance with the invention. System 100 is functionally comprised of a user-interface apparatus 102, a selection means 104 and a processing means 106. User-interface apparatus 102 includes a plurality of functionally different coordinate input devices, e.g., both an absolute-coordinate input device and a relative-coordinate input device. For example, user-interface apparatus is provided with two or more of following functionalities: a touch tablet 108, responsive to the user's finger, and a graphical tablet 110 responsive to a stylus, a joystick device 112, a trackball device 114 and a mouse device 116. Touch tablet 108 and graphical tablet 110 are, for instance, merged with one another as in the PAID device mentioned above. Each respective one of devices 108-116 is responsive to a different kind of user-input. Each of devices 108-116 provides data that are representative of coordinates of the corresponding user-operated stimulus. Devices 108-116 are coupled via selection means 104 to processing means 106, e.g., a host computer, for processing of the data. Selection means 104 selects the data from a particular one of devices 108-116 in order to avoid data ambiguity, interference or clashes.

Processing means 106 is operative to run an application program 118 to process data provided by any of devices 108-116. That is, system 100 is adapted to let the user interact with a given application program via touch tablet 108 and graphical tablet 110, and also via joystick 112, trackball 114 and mouse 116. Assume that application program 118 is written as "mouse"-software. Then there is no substantial problem with regard to interaction via joystick 112, trackball 114 or mouse 116 as all three are relative-coordinate input devices. Touch tablet 108 and graphical tablet 110 on the other hand are absolute coordinate devices that, in addition to absolute coordinate data, supply force-related data. It is then required that the data provided by touch tablet 108 and by graphical tablet 110 be interpreted correctly by application program 118 to enable a meaningful interaction of the user with the mouse software loaded into system 100.

This correct interpretation can be achieved in a variety of ways. A first example is to have user-interface 102 supplying data of a particular format only, the format being compatible with application program 118. A second example is that selection means 104 or processing means 106 translates the received data correctly into the required format, e.g., under control of a source identifier that indicates which one of devices 108-116 is acting as a data source. A third example is a separate interpreter (not shown) inserted somewhere along the data path between devices 108-116 and application program 118. A fourth example is a dedicated interpreter in software form, e.g., an input device driver, included in processing means 106 (e.g., host) or in application program 118, or in an on-board controller (not shown) of user-interface apparatus 102.

Although Fig. 1 shows user-interface 102, selection means 104 and processing means 106 as physically separate functionalities, these may also be merged with one another partly or entirely. For example, selection means 104 may be part of processing means 106 or of user-interface apparatus 102. Automatic selection can be achieved by establishing a particular priority scheme among devices 108-116 to automatically select that one among the actuated devices, which ranks the highest among the active ones of devices 108-116. The one gaining priority then is permitted to supply data to processing means 106. When selection means 104 is merged with user-interface apparatus 102, contest between touch tablet and graphical tablet is avoided by, for instance, detection of the presence of the stylus proximate, i.e., within a pre-specified range, to graphical tablet 110 to reversibly disable touch tablet 108. When selection means 102 is merged with processing means 106, contest may be avoided by a software procedure acting as an arbiter according to a predetermined priority scheme.

### Second example

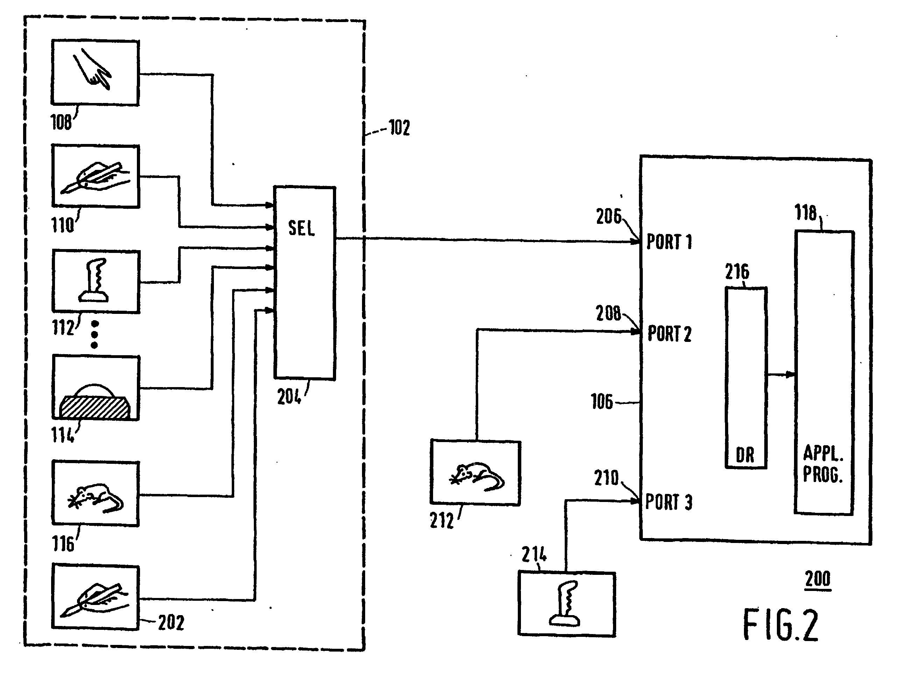

Fig. 2 shows a second example of an information processing system 200 in the invention. User-interface apparatus 102 in system 200 comprises a plurality of coordinate input devices 108-116 and 202, among which there may be a number of devices with a similar functionality, for example, two (or more) graphical tablets 110 and 202. This is an attractive feature permitting several users to alternately communicate through user-interface 102, e.g., when playing a video game or when sharing the same virtual workspace in computer supported collaborative work. A first selection means 204 is connected to devices 108-116 and 202, and is physically integrated in user-interface apparatus 102 for automatically selecting a particular one of devices 108-116 and 202 to provide data to processing means 106. User-interface apparatus 102 is connected to a first port 206 of processing means 106. First selection means 204 is, for example, implemented in software in a controller of apparatus 102.

Processing means 106 is provided with one or more further input ports, such as second port 208 and third port 210 in this example. Further coordinate input devices such as a further mouse 212 and a further joystick 214 can be hooked up to ports 208 and 210. User-interface apparatus 102, further mouse 212 and further joystick 214 all provide data to processing means 106 that is operative to run application program 118 to process data provided by any of entities 102, 212 and 214. To this end, processing means 106 in system 200 is furnished with a second selection means 216, whose function it is to select between the data received by either port 206, or 208 or 210 to supply the data at the selected input port to application program 118. Thus the selection mechanism is distributed among a plurality of levels in a hierarchy of coordinate input devices. Second selection means 216 preferably is an input device driver in software form selecting between the data received via ports 206-210, e.g., on the basis of a pre-specified priority scheme to handle effectively simultaneous access requests.

## Claims

1. An information processing system (100; 200) comprising:
a user-interface apparatus (102) that includes a plurality of functionally different coordinate input devices (108-116; 202), in which each respective one of the devices (108-116; 202) is arranged for locating a respective one of a plurality of user-generated stimuli for thereupon providing respective data representative of the respective user-generated stimulus; and
processing means (106) coupled to the plurality of coordinate input devices (108-116; 202, 212, 214) for processing of the respective data;
the processing means (106) being arranged for running an application program that is dedicated to receive data in a coordinate format of a single one of the input devices (108-116; 202, 212, 214);
the information processing system (100; 200) being arranged for supplying the respective data from the plurality of coordinate input devices (108-116; 202, 212, 214) to the application program in said coordinate format of said single one of the input devices, for uniformly processing data provided by any of the plurality of coordinate input devices (108-116; 202, 212, 214)
**characterized in that**
the system comprises selection means (104; 204, 216) that is operative to automatically select a particular one of the coordinate input devices (108-116; 202, 212, 214) among the plurality of coordinate input devices (108-116; 202, 212, 214) for providing data to the processing means (106),
the selection means (104; 204, 216) being operative to perform the following operations:
determining which ones of the plurality of coordinate input devices (108-116; 202, 212, 214) are actuated simultaneously;
determining which one of the simultaneously actuated coordinate input devices is to gain priority over each other one of the simultaneously actuated coordinate input devices according to a priority scheme;
selecting the particular one of the coordinate input devices (108-116; 202, 212, 214) as the one gaining the priority.

2. The system of claim 1, wherein:
a first one of the plurality of coordinate input devices (108-116; 202) comprises a touch tablet for providing first data representative of a first coordinate of a location of a first user-operated stimulus, corresponding with the user's finger, with regard to the touch tablet;
a second one of the plurality of coordinate input devices (108-116; 202) comprises a graphical tablet for providing second data representative of a second coordinate of a location of a second user-operated stimulus, corresponding with a stylus, with regard to the graphical tablet;
and wherein:
the selection means (104; 204) is operative to provide the first data to the processing means (106) in a touch mode, and to provide the second data to the processing means (106) in a stylus mode, the selection means (104; 204) being operative to switch between said modes under control of an interaction of one of said first and second stimuli with the user-interface attaining a pre-specified magnitude.

3. The system of claim 2, wherein the selection means (104; 204) is operative to switch between said modes under control of at least one of following interactions:
the stylus being within a pre-specified range from the graphical tablet;
a pressure exerted by the graphical tablet on a tip of the stylus exceeding a pre-specified threshold;
a force exerted on the touch tablet by a hand of the user exceeding a pre-specified further threshold.

4. The system of claim 1, wherein
a first one of the plurality of coordinate input devices (108-116; 202, 212, 214) comprises an absolute coordinate input device for providing data representative of an absolute coordinate of a location of a first one of the user-operated stimuli;
a second one of the plurality of coordinate input devices (108-116; 202, 212, 214) comprises a relative coordinate input device for providing second data representative of a relative displacement of a second one of the user-operated stimuli;
and wherein:
the processing means (106) is operative to run at least a relative-coordinate application program or an absolute-coordinate application program to process both the first and second data.

5. The system of claim 1, wherein
a first one of the plurality of coordinate input devices (108-116; 202, 212, 214) comprises a touch tablet for providing first data representative of a first absolute coordinate of a location of a user's finger with regard to the touch tablet;
a second one of the plurality of coordinate input devices (108-116; 202, 212, 214) comprises a graphical tablet for providing second data representative of a second absolute coordinate of a location of a stylus with regard to the graphical tablet;
and wherein:
the processing means (106) is operative to run a relative-coordinate application program to process data provided by any of the tablets.

## Patentansprüche

1. Informationsverarbeitungssystem (100; 200), das die nachfolgenden Elemente umfasst:
. eine Benutzerschnittstellenanordnung (102), die eine Anzahl funktionell verschiedener Koordinateneingabevorrichtungen (108-116; 202) umfasst, wobei jede einzelne Anordnung (108 - 116; 202) vorgesehen ist zum Orten eines betreffenden Stimulus von einer Anzahl vom Benutzer erzeugter Stimuli um daraufhin betreffende Daten zu schaffen, die repräsentativ sind für diesen betreffenden vom Benutzer erzeugten Stimulus, und
. Verarbeitungsmittel (106), die mit der Anzahl Koordinateneingabevorrichtungen (108-116; 202, 212, 214) gekoppelt sind zum Verarbeiten der betreffenden Daten;
. wobei die Verarbeitungsmittel (106) vorgesehen sind zum Durchführen eines Applikationsprogramms, das bestimmt ist zum Empfangen von Daten in einem Koordinatenformat einer einzelnen Anordnung der Eingabeanordnungen (108 - 116; 202, 212, 214),
. wobei das Informationsverarbeitungssystem (100; 200) vorgesehen ist zum Liefern der betreffenden Daten aus der Anzahl Koordinateneingabevorrichtungen (108-116; 202, 212, 214) zu dem Applikationsprogramm in dem genannten Koordinatenformat der genannten einzelnen Anordnung der Eingabeanordnungen zur einheitlichen Verarbeitung von Daten, die von jeder Anordnung der Anzahl Koordinateneingabevorrichtungen (108 - 116; 202, 212, 214) geliefert worden sind,
**dadurch gekennzeichnet, dass**
das System Selektionsmittel (104; 204, 216) umfasst, die wirksam sind zum automatischen Wählen einer bestimmten Vorrichtung der Koordinateneingabevorrichtungen (108 - 116; 202, 212, 214) aus den vielen Koordinateneingabevorrichtungen (108 - 116; 202, 212, 214) zum Liefern von Daten zu den Verarbeitungsmitteln (106),
. wobei die Selektionsmittel (104; 204, 216) wirksam sind zum Durchführen der nachfolgenden Vorgänge:
. das Ermitteln, welche Vorrichtungen der vielen Koordinateneingabevorrichtungen (108-116; 202, 212, 214) simultan betätigt werden;
. das Ermitteln, welche Vorrichtung der simultan betätigten Koordinateneingabevorrichtungen gegenüber jeder anderen Vorrichtung der simultan betätigten Koordinateneingabevorrichtungen entsprechend einem Prioritätsschema Priorität erhält;
. das Selektieren der betreffenden Vorrichtung der Koordinateneingabevorrichtungen (108 - 116; 202, 212, 214) als diejenige, die Priorität erhält.

2. System nach Anspruch 1, wobei
. eine erste Vorrichtung der vielen Koordinateneingabevorrichtungen (108 - 116; 202) ein Berührungstablett aufweist zum Liefern erster Daten, die für eine erste Koordinate einer Stelle eines vom Benutzer betriebenen Stimulus, entsprechend dem Finger eines Benutzers, gegenüber dem Berührungstablett repräsentativ sind und
. eine zweite Vorrichtung der vielen Koordinateneingabevorrichtungen (108 - 116; 202) ein graphisches Tablett aufweist zum Liefern zweiter Daten, die für eine-zweite Koordinate einer Stelle eines zweiten vom Benutzer betriebenen Stimulus, entsprechend einem Stift, gegenüber dem graphischen Tablett repräsentativ sind, und wobei
. das Selektionsmittel (104; 204) dem Verarbeitungsmittel (106) in einer Berührungsmode die ersten Daten liefert, und dem Verarbeitungsmittel (106) in einer Stiftmode die zweiten Daten liefert, wobei das Selektionsmittel (104; 204) unter Ansteuerung einer Interaktion eines Stimulus der ersten und zweiten Stimuli, wobei die Benutzerschnittstelle eine vorbestimmte Größe erreicht, zwischen den genannten Moden schaltet.

3. System nach Anspruch 2, wobei das Selektionsmittel (104; 204) unter Ansteuerung wenigstens einer der nachfolgenden Interaktionen zwischen den genannten Moden schaltet, wenn:
. der Stift sich innerhalb eines vorbestimmten Bereichs vom Graphiktablett befindet;
. das Graphiktablett Druck auf eine Spitze des Stiftes ausübt, wobei dieser Druck eine vorbestimmte Schwelle übersteigt, oder
. auf das Berührungstablett durch die Hand des Benutzers eine Kraft ausgeübt wird, die eine vorbestimmte weitere Schwelle übersteigt.

4. System nach Anspruch 1, wobei:
. eine erste Vorrichtung der vielen Koordinateneingabevorrichtungen (108 - 116; 202, 212, 214) eine Absolut-Koordinateneingabevorrichtung aufweist zum Liefern von Daten, die repräsentativ sind für eine absolute Koordinate einer Stelle eines ersten Stimulus der vom Benutzer betriebenen Stimuli und
. eine zweite Vorrichtung der vielen Koordinateneingabevorrichtungen (108 - 116; 202, 212, 214) eine Relativ-Koordinateneingabevorrichtung aufweist zum Liefern zweiter Daten, die für eine relative Verlagerung eines zweiten Stimulus der vom Benutzer betriebenen Stimuli repräsentativ sind, und wobei
. das Verarbeitungsmittel (106) wenigstens ein Relativ-Koordinatenapplikationsprogramm oder ein Absolut-Koordinatenapplikationsprogramm ablaufen lässt zum Verarbeiten der ersten sowie der zweiten Daten.

5. System nach Anspruch 1, wobei:
. eine erste Vorrichtung einer Anzahl Koordinateneingabevorrichtungen (108 - 116; 202, 212, 214) ein Berührungstablett aufweist zum Liefern erster Daten, die für eine erste absolute Koordinate einer Stelle des Fingers eines Benutzers gegenüber dem Berührungstablett repräsentativ sind;
. eine zweite Vorrichtung einer Anzahl Koordinateneingabevorrichtungen (108 - 116; 202, 212, 214) ein Graphiktablett aufweist zum Liefern zweiter Daten, die für eine zweite absolute Koordinate einer Stelle eines Stiften gegenüber dem Graphiktablett repräsentativ sind; und wobei:
. das Verarbeitungsmittel (106) ein Relativ-Koordinatenapplikationsprogramm laufen lässt zum Verarbeiten von Daten, die von jedem der Tabletts geliefert werden.

## Revendications

1. Système de traitement d'informations (100;200) comprenant :
- un appareil d'interface utilisateur (102) qui comprend une pluralité de dispositifs d'entrée de coordonnées (108-116; 202) de fonctionnalités différentes, dans lequel chaque dispositif respectif (108-116; 202) est agencé pour localiser un stimulus respectif parmi une pluralité de stimuli générés par l'utilisateur pour ensuite fournir des données respectives représentatives du stimulus respectif généré par utilisateur, et
- un moyen de traitement (106) connecté à la pluralité de dispositifs d'entrée de coordonnées (108-116; 202, 212, 214) pour traiter les données respectives;
- le moyen de traitement (106) étant agencé pour exploiter un programme d'application qui est spécialisé pour recevoir des données dans un format de coordonnées d'un seul dispositif d'entrée de coordonnées (108-116; 202, 212, 214);
- le système de traitement d'informations (100; 200) étant agencé pour fournir les données respectives de la pluralité de dispositifs d'entrée de coordonnées (108-116; 202, 212, 214) au programme d'application dans ledit format de coordonnées dudit dispositif d'entrée unique afin de traiter uniformément les données fournies par l'un quelconque de la pluralité de dispositifs d'entrée de coordonnées (108-116; 202, 212, 214),
**caractérisé en ce que**
- le système comprend un moyen de sélection (104; 204; 216) qui sert à sélectionner automatiquement un dispositif d'entrée de coordonnées particulier (108-116; 202, 212, 214) parmi la pluralité de dispositifs d'entrée de coordonnées (108-116; 202, 212, 214) pour fournir des données au moyen de traitement (106);
le moyen de sélection (104; 204; 216) servant à exécuter les opérations suivantes :
- déterminer ceux de la pluralité de dispositifs d'entrée de coordonnées (108-116; 202, 212, 214) qui sont actionnés simultanément;
- déterminer celui des dispositifs d'entrée de coordonnées simultanément actionnés qui doit avoir la priorité sur chaque autre des dispositifs d'entrée de coordonnées simultanément actionnés suivant un système de priorités;
- sélectionner le dispositif particulier des dispositifs d'entrée de coordonnées (108-116; 202, 212, 214) comme celui ayant la priorité.

2. Système suivant la revendication 1, dans lequel :
- un premier dispositif de la pluralité de dispositifs d'entrée de coordonnées (108-116; 202) comprend une tablette à effleurement pour fournir des premières données représentatives d'une première coordonnée d'un emplacement d'un premier stimulus déclenché par l'utilisateur, correspondant au doigt de l'utilisateur, par rapport à la tablette à effleurement;
- un deuxième dispositif de la pluralité de dispositifs d'entrée de coordonnées (108-116; 202) comprend une tablette graphique pour fournir des deuxièmes données représentatives d'une deuxième coordonnée d'un emplacement d'un deuxième stimulus déclenché par l'utilisateur, correspondant à un stylet, par rapport à la tablette graphique;
et dans lequel :
- le moyen de sélection (104; 204) sert à fournir les premières données au moyen de traitement (106) dans un mode d'effleurement, et à fournir les deuxièmes données au moyen de traitement (106) dans un mode de stylet, le moyen de sélection (104; 204) servant à commuter d'un mode à l'autre sous le contrôle d'une interaction d'un desdits premier et deuxième stimuli, l'interface utilisateur atteignant une amplitude préalablement spécifiée.

3. Système suivant la revendication 2, dans lequel le moyen de sélection (104; 204) sert à commuter entre lesdits modes sous le contrôle d'au moins une des interactions suivantes :
- le stylet se situe dans un intervalle de distance préalablement spécifié de la tablette graphique;
- une pression exercée par la tablette graphique sur un bout du stylet dépasse un seuil préalablement spécifié;
- une force exercée sur la tablette à effleurement par une main de l'utilisateur dépasse un autre seuil préalablement spécifié.

4. Système suivant la revendication 1, dans lequel :
- un premier dispositif parmi la pluralité de dispositifs d'entrée de coordonnées (108-116; 202, 212, 214) comprend un dispositif d'entrée de coordonnées absolues pour fournir des données représentant une coordonnée absolue d'un emplacement d'un premier stimulus déclenché par l'utilisateur;
- un deuxième dispositif parmi la pluralité de dispositifs d'entrée de coordonnées (108-116; 202, 212, 214) comprend un dispositif d'entrée de coordonnées relatives pour fournir des deuxièmes données représentatives d'un déplacement relatif d'un deuxième stimulus déclenché par l'utilisateur;
et dans lequel :
- le moyen de traitement (106) sert à exploiter au moins un programme d'application de coordonnées relatives ou un programme d'application de coordonnées absolues pour traiter à la fois les premières et les deuxièmes données.

5. Système suivant la revendication 1, dans lequel :
- un premier dispositif de la pluralité de dispositifs d'entrée de coordonnées (108-116; 202, 212, 214) comprend une tablette à effleurement pour fournir des premières données représentatives d'une première coordonnée absolue d'un emplacement de doigt d'utilisateur par rapport à la tablette à effleurement;
- un deuxième dispositif de la pluralité de dispositifs d'entrée de coordonnées (108-116; 202,212,214) comprend une tablette graphique pour fournir des deuxièmes données représentant une deuxième coordonnée absolue d'un emplacement d'un stylet par rapport à la tablette graphique; et dans lequel :
- le moyen de traitement (106) sert à exploiter un programme d'application de coordonnées relatives pour traiter des données fournies par l'une quelconque des tablettes.
